(19) Europäisches Patentamt
European Patent Office
Office européen des brevets

(11) **EP 3 563 140 B1**

(12) **FASCICULE DE BREVET EUROPEEN**

(45) Date de publication et mention
de la délivrance du brevet:
**30.09.2020 Bulletin 2020/40**

(21) Numéro de dépôt: **17816731.8**

(22) Date de dépôt: **12.12.2017**

(51) Int Cl.:
*G01N 15/06* *(2006.01)*  *G01N 21/03* *(2006.01)*
*G01N 21/17* *(2006.01)*  *G01N 21/3504* *(2014.01)*
*G01N 21/51* *(2006.01)*  *G01N 29/032* *(2006.01)*
*G01N 29/24* *(2006.01)*

(86) Numéro de dépôt international:
**PCT/EP2017/082438**

(87) Numéro de publication internationale:
**WO 2018/121982 (05.07.2018 Gazette 2018/27)**

(54) **DISPOSITIF DE DETECTION DE GAZ OU DE PARTICULES ET PROCEDE DE FABRICATION D'UN TEL DISPOSITIF**

VORRICHTUNG ZUR DETEKTION VON GAS ODER PARTIKELN UND VERFAHREN ZUR HERSTELLUNG EINER SOLCHEN VORRICHTUNG

DEVICE FOR DETECTING GAS OR PARTICLES AND METHOD FOR MANUFACTURING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.01.2017 FR 1750004**

(43) Date de publication de la demande:
**06.11.2019 Bulletin 2019/45**

(73) Titulaire: **Commissariat à l'Énergie Atomique et aux Énergies Alternatives**
**75015 Paris (FR)**

(72) Inventeur: **BOUTAMI, Salim**
**38100 Grenoble (FR)**

(74) Mandataire: **Cabinet Camus Lebkiri**
**25 rue de Maubeuge**
**75009 Paris (FR)**

(56) Documents cités:
**EP-A1- 2 515 096**   **EP-A1- 2 930 506**
**DE-A1- 10 144 808**   **JP-A- 2016 223 804**

**Description**

**DOMAINE TECHNIQUE DE L'INVENTION**

Le domaine technique de l'invention est celui de la détection de gaz ou de particules. Un aspect de la présente invention concerne un dispositif de détection de gaz ou de particules, et en particulier un dispositif de détection de gaz ou de particules par interaction avec un faisceau lumineux. Un gaz est composé de molécules distinctes, de taille sub-nanométrique. Une particule est solide, composée de molécules solidaires entre elle. La taille totale d'une particule dépasse le nanomètre, voire le micromètre. Un autre aspect de l'invention concerne un procédé de fabrication d'un tel dispositif de détection.

**ARRIERE-PLAN TECHNOLOGIQUE DE L'INVENTION**

L'objectif d'un détecteur est généralement non seulement de déterminer la présence ou non d'un élément donné, mais également, en cas de présence de cet élément, de déterminer sa concentration.

Pour détecter des gaz ou des particules, il est notamment possible d'utiliser un détecteur par atténuation de lumière ou un détecteur photoacoustique. Un détecteur par atténuation de lumière est basé sur une propriété d'absorption ou de diffusion de lumière d'un élément à détecter : une partie du faisceau lumineux interagissant avec l'élément à détecter est absorbée ou diffusée par l'élément à détecter. Cela entraîne une atténuation du faisceau lumineux qui est mesurée par un détecteur de lumière. Dans un détecteur photoacoustique, une source lumineuse variable dans le temps, telle qu'un laser pulsé ou modulé en amplitude ou en longueur d'onde, interagit avec l'élément à détecter. L'énergie absorbée par l'élément à détecter est restituée sous la forme d'un échauffement transitoire qui génère une onde de pression, elle-même mesurée par un détecteur acoustique. Pour les types de détecteurs précédemment évoqués, un paramètre important est la longueur d'interaction de la lumière avec l'élément à détecter. Par exemple, dans le cas d'un détecteur par absorption lumineuse, si le gaz absorbe trop peu la lumière, on ne pourra pas être sûr qu'il est présent. Si au contraire le gaz absorbe trop la lumière, on ne pourra pas définir sa concentration avec certitude car toute concentration supérieure à un certain seuil peut mener à une absorption totale et à une absence de signal au détecteur. De même, dans le cas d'un détecteur de particules par diffusion lumineuse, si les particules diffusent trop peu la lumière, on ne pourra pas être sûr qu'elles sont présentes, et si au contraire elles diffusent trop la lumière, on ne pourra pas définir leur concentration avec certitude. Il s'agit donc de contrôler précisément la longueur d'interaction de la lumière avec l'élément à détecter, en fonction du type d'élément à détecter et de sa concentration : pour un type donné d'élément à détecter, on choisit une longueur d'interaction d'autant plus grande que la concentration de l'élément à détecter est faible.

Pour maximiser une interaction lumière-matière et ainsi permettre la détection de faibles concentrations de gaz ou de particules, il est notamment connu de confiner la lumière et l'élément à détecter dans une cavité creuse à parois réfléchissantes.

L'utilisation de cavités creuses monomodes, dans lesquelles la lumière suit un seul chemin, permet de contrôler la longueur d'interaction de la lumière avec l'élément à détecter et donc de dimensionner précisément un dispositif pour la détection d'une certaine gamme de concentrations. Toutefois, de telles cavités monomodes sont fines et la lumière qu'elles confinent subit de très nombreuses réflexions, ce qui occasionne des pertes indésirables de signal. L'utilisation alternative de cavité creuses multimodes, plus larges, occasionne moins de pertes mais ne permet pas de contrôler précisément la longueur d'interaction de la lumière avec le gaz car la lumière se propage alors selon plusieurs chemins différents.

Par ailleurs, les dispositifs de détection de gaz ou de particules de l'art antérieur ne peuvent être dimensionnés que pour la détection d'un seul type de gaz ou de particules, sur une plage de concentration $[c_{min} ; c_{max}]$ restreinte, c'est-à-dire pour laquelle $c_{max}/c_{min}$ - 10.

On connait également un exemple de dispositif de détection de gaz ou de particules décrit dans le document EP2930506A1.

**RESUME DE L'INVENTION**

L'invention offre une solution aux problèmes évoqués précédemment, en proposant un dispositif de détection d'au moins un type de gaz ou de particules sur une large plage de concentration $[c_{min} ; c_{max}]$ telle que $c_{max}/c_{min} > 10$, ou d'une pluralité de types différents de gaz ou de particules sur au moins sur une plage de concentration $[c_{min} ; c_{max}]$ restreinte, le dispositif permettant de contrôler une longueur d'interaction de la lumière avec chaque élément à détecter selon son type et sa concentration, tout en minimisant le nombre de réflexions de la lumière.

Un aspect de l'invention concerne ainsi un dispositif de détection de gaz ou de particules selon la revendication 1, comportant :

- une source lumineuse apte à émettre un faisceau lumineux à au moins une longueur d'onde,
- une cavité d'interaction de gaz ou de particules avec le faisceau lumineux comportant des première et seconde parois réfléchissantes sensiblement parallèles entre elles et en regard l'une de l'autre,
- une pluralité de guides d'ondes optiques monomodes ayant chacun une première extrémité de largeur l1 couplée optiquement à la source lumineuse et une deuxième extrémité de largeur l2, supérieure à la largeur l1, couplée optiquement à une première extrémité de la cavité d'interaction, chaque guide d'onde optique comportant dans sa deuxième extrémité de largeur l2 un réseau de diffraction présentant un pas P distinct choisi en fonction de la longueur d'onde $\lambda$ du faisceau lumineux propagé dans le guide d'onde optique associé audit réseau de diffraction, de l'indice de gaine n du guide d'onde optique associé au réseau de diffraction, de l'indice effectif $n_{eff}$ du mode propagé dans le guide d'onde optique associé au réseau de diffraction, de la longueur L et de la hauteur H de la cavité, du taux de réflexion R des première et seconde parois réfléchissantes de la cavité pour le faisceau lumineux à la longueur d'onde À, d'une concentration C d'un type de gaz ou de particules à détecter et d'un paramètre $\alpha$ d'interaction du type de gaz ou de particules à détecter avec le faisceau lumineux ;
- et un détecteur couplé à une deuxième extrémité de la cavité d'interaction.

On entend par « largeur » d'une extrémité d'un guide d'onde une première dimension qui se trouve dans un plan de propagation du faisceau lumineux dans le guide d'onde et qui est perpendiculaire à une direction de propagation du faisceau lumineux dans le guide d'onde. On entend par « plan de propagation » un plan auquel appartient la direction de propagation du faisceau lumineux dans le guide d'onde. On entend par « longueur » de la cavité une deuxième dimension qui se trouve dans le plan de propagation du faisceau lumineux dans le guide d'onde et qui est parallèle à la direction de propagation du faisceau lumineux dans le guide d'onde. La deuxième dimension longueur est donc perpendiculaire à la première dimension largeur précédemment définie. On entend par « hauteur » de la cavité une troisième dimension qui est perpendiculaire à la première dimension largeur et à la deuxième dimension longueur.

Grâce à l'invention, le pas P de chaque réseau de diffraction est choisi de manière que le faisceau lumineux de longueur d'onde $\lambda$ diffracté par ledit réseau de diffraction emprunte un chemin au sein de la cavité d'interaction qui est optimisé pour un type particulier d'élément à détecter, grâce au paramètre d'interaction $\alpha$, et pour une concentration particulière C de l'élément à détecter. L'élargissement de la deuxième extrémité de chaque guide d'onde diminue voire supprime la diffraction du faisceau lumineux dans la direction parallèle à cette largeur, et le réseau de diffraction agencé dans la deuxième extrémité de chaque guide d'onde diffracte le faisceau lumineux dans une direction spécifique en sortie du guide d'onde. On contrôle ainsi précisément la direction dans laquelle la lumière se propage en sortie du guide d'onde, et on choisit cette direction pour optimiser une longueur d'interaction avec un élément à détecter, en fonction du type et de la concentration de cet élément. L'élément à détecter est soit un type de gaz, soit un type de particules.

Outre les caractéristiques qui viennent d'être évoquées dans le paragraphe précédent, le dispositif de détection de gaz ou de particules selon un aspect de l'invention peut présenter une ou plusieurs caractéristiques complémentaires parmi les suivantes, considérées individuellement ou selon toutes les combinaisons techniquement possibles :

- Le pas P est choisi de manière à minimiser la norme de l'équation suivante :

$$f(P) = ln\left(1 + \frac{\alpha H C}{\sqrt{n^2 - \left(n_{eff} - \frac{\lambda}{P}\right)^2} \, ln\left(\frac{1}{R}\right)}\right) \sqrt{1 - n^2 + \left(n_{eff} - \frac{\lambda}{P}\right)^2} - \alpha L C$$

On entend par « minimiser la norme de l'équation f(P) » le fait de rendre f(P) le plus proche possible de zéro. En choisissant le pas P de chaque réseau de diffraction pour minimiser la norme de la fonction f, on garantit que le faisceau lumineux de longueur d'onde $\lambda$ diffracté par ledit réseau de diffraction emprunte un chemin au sein de la cavité d'interaction qui est optimisé pour un type particulier d'élément à détecter, grâce au paramètre d'interaction $\alpha$, et pour une concentration particulière C de l'élément à détecter.

- Le dispositif de détection de gaz ou de particules comporte avantageusement au moins un premier réseau de diffraction ayant un premier pas, et un deuxième réseau de diffraction ayant un deuxième pas distinct du premier pas. On obtient ainsi au moins deux longueurs d'interaction différentes entre le faisceau lumineux et l'élément à détecter au sein de la cavité d'interaction, chaque longueur d'interaction pouvant être adaptée précisément à un type et une concentration d'élément à détecter.

- Chaque guide d'onde optique monomode présentant une couche de cœur intercalée entre des première et seconde couches de gaine, le dispositif de détection de gaz ou de particules comporte avantageusement une couche réfléchissante dans le prolongement de la deuxième paroi réfléchissante, et la première couche de gaine est avantageusement agencée sur ladite couche réfléchissante en présentant une épaisseur e telle que :

$$\frac{\lambda_{moy}}{8n} \leq e \leq \frac{3\lambda_{moy}}{8n}$$

où $\lambda_{moy}$ est la longueur d'onde moyenne de l'ensemble des longueurs d'onde utilisées et n est l'indice de la première couche de gaine. Ainsi, les rayons lumineux extraits d'un réseau de diffraction donné et qui pénètrent dans la cavité ont tous le même angle d'extraction et suivent tous le même trajet optique tout en étant en interférence constructive les uns avec les autres.

- Le dispositif de détection de gaz ou de particules comporte des premier et deuxième évents communiquant avec la cavité d'interaction. On permet ainsi une circulation améliorée d'un flux de gaz ou de particules dans la cavité d'interaction.

- Le dispositif de détection de gaz ou de particules est avantageusement tel que :

   ◦ la cavité d'interaction est une cavité optique,
   ◦ le détecteur est un détecteur de lumière et est agencé sensiblement parallèlement au plan de référence, dans le plan de la première paroi réfléchissante,
   ◦ le pas P de chaque réseau de diffraction appartient en outre à la suite ($P_m$), avec m un entier naturel, telle que :

$$P_m = \frac{\lambda}{n_{eff} - \sqrt{n^2 - \frac{(2m+1)^2}{(2m+1)^2 + \left(\frac{L}{H}\right)^2}}}$$

   ◦ les réseaux de diffraction s'étendent sensiblement suivant un même plan et chaque réseau de diffraction de pas P présente une pluralité de structures parallèles entre elles, espacées du pas P, et perpendiculaires à une direction radiale relativement au détecteur de lumière.

On garantit ainsi que le faisceau lumineux aboutit au détecteur, lorsque le détecteur est agencé dans le plan de la première paroi réfléchissante. Cela permet une détection par atténuation de lumière.

- Alternativement, le dispositif de détection de gaz ou de particules est avantageusement tel que :

   ◦ la cavité d'interaction est une cavité optique,
   ◦ le détecteur est un détecteur de lumière et est agencé sensiblement parallèlement au plan de référence, dans le plan de la seconde paroi réfléchissante,
   ◦ le pas P de chaque réseau de diffraction appartient en outre à la suite ($P_m$), avec m un entier naturel, telle que :

$$P_m = \frac{\lambda}{n_{eff} - \sqrt{n^2 - \frac{(2m+2)^2}{(2m+2)^2 + \left(\frac{L}{H}\right)^2}}}$$

   ◦ les réseaux de diffraction s'étendent sensiblement suivant un même plan et chaque réseau de diffraction de pas P présente une pluralité de structures parallèles entre elles, espacées du pas P, et perpendiculaires à une direction radiale relativement au détecteur de lumière.

On garantit ainsi que le faisceau lumineux aboutit au détecteur, lorsque le détecteur est agencé dans le plan de la seconde paroi réfléchissante. Cela permet une détection par atténuation de lumière.

- Le paramètre d'interaction du type de gaz ou de particules à détecter avec le faisceau lumineux est un paramètre d'absorptivité $\alpha$ et la source lumineuse est apte à émettre un faisceau lumineux à au moins une première longueur d'onde correspondant à une longueur d'onde d'absorption d'un premier gaz à détecter, et à au moins une deuxième longueur d'onde distincte de la première longueur d'onde et correspondant à une longueur d'onde d'absorption d'un deuxième gaz à détecter. On permet ainsi une détection optimisée pour au moins deux gaz à détecter différents.

Un autre aspect de l'invention concerne, d'après la revendication 9, un procédé de fabrication d'un dispositif de détection de gaz ou de particules comportant une source lumineuse apte à émettre un faisceau lumineux à au moins une longueur d'onde $\lambda$, une cavité d'interaction de gaz ou de particules avec le faisceau lumineux comportant des première et seconde parois réfléchissantes sensiblement parallèles entre elles, une pluralité de guides d'ondes optiques monomodes ayant chacun une première extrémité de largeur l1 couplée optiquement à la source lumineuse et une deuxième extrémité de largeur l2, supérieure à la largeur l1, couplée optiquement à une première extrémité de la cavité d'interaction, et un détecteur couplé à une deuxième extrémité de la cavité d'interaction, le procédé comportant au moins les étapes suivantes :

- dans une première partie d'un premier substrat, réalisation de la pluralité de guides d'ondes optiques monomodes, chaque guide d'onde optique comportant une couche de cœur intercalée entre des première et seconde couches de gaine, ainsi qu'un réseau de diffraction agencé à une interface entre la couche de cœur et l'une des première ou seconde couches de gaine, chaque réseau de diffraction présentant un pas P distinct choisi en fonction de la longueur d'onde $\lambda$ du faisceau lumineux propagé dans le guide d'onde optique associé audit réseau de diffraction, de l'indice de gaine n du guide d'onde optique associé au réseau de diffraction, de l'indice effectif $n_{eff}$ du mode propagé dans le guide d'onde optique associé au réseau de diffraction, de la longueur L et de la hauteur H de la cavité, du taux de réflexion R des première et seconde parois réfléchissantes de la cavité pour le faisceau lumineux à la longueur d'onde $\lambda$, d'une concentration C d'un type de gaz ou de particules à détecter et d'un paramètre $\alpha$ d'interaction du type de gaz ou de particules à détecter avec le faisceau lumineux ;
- dépôt d'une première couche réfléchissante sur la pluralité de guides d'ondes optiques réalisée dans la première partie du premier substrat et sur une deuxième partie du premier substrat ;
- gravure, dans la deuxième partie (sp2) du premier substrat, d'une cavité débouchant sur la première couche réfléchissante ;
- sur un deuxième substrat, dépôt d'une deuxième couche réfléchissante ;
- gravure, dans la deuxième couche réfléchissante et dans le deuxième substrat, d'un emplacement destiné à recevoir le détecteur ;
- assemblage des premier et deuxième substrats de manière que :

  ◦ les première et deuxième couches réfléchissantes se trouvent en regard l'une de l'autre,
  ◦ l'emplacement destiné à recevoir le détecteur se trouve à l'aplomb de la cavité,
  ◦ la pluralité de guides d'ondes optiques se trouve entre les première et deuxième couches réfléchissantes.

Outre les caractéristiques qui viennent d'être évoquées dans le paragraphe précédent, le procédé de fabrication selon un aspect de l'invention peut présenter une ou plusieurs caractéristiques complémentaires parmi les suivantes, considérées individuellement ou selon toutes les combinaisons techniquement possibles :

- Le procédé peut comporter, après l'étape de gravure, dans la deuxième partie du premier substrat, d'une cavité débouchant sur la première couche réfléchissante, une étape de dépôt, sur le premier substrat formant une paroi de la cavité précédemment gravée, d'une première couche antireflet ; et l'étape de gravure de l'emplacement destiné à recevoir le détecteur peut comporter les trois sous-étapes suivantes :

  ◦ gravure, dans la deuxième couche réfléchissante, d'un premier emplacement débouchant sur le deuxième substrat ;
  ◦ dépôt, sur le deuxième substrat débouchant dans le premier emplacement, d'une deuxième couche antireflet ;
  ◦ gravure, dans le deuxième substrat, d'un deuxième emplacement destiné à recevoir le détecteur.

- Le procédé peut en outre comporter :

  ◦ une étape de gravure, dans la deuxième partie du premier substrat, d'au moins des premier et deuxième évents débouchant sur la cavité gravée dans la deuxième partie du premier substrat ;
  ◦ après l'assemblage des premier et deuxième substrats, une étape de gravure du deuxième substrat de manière à déboucher sur les premier et deuxième évents, sans déboucher sur la cavité.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une vue en coupe schématique d'un dispositif de détection de gaz ou de particules selon un premier ou un deuxième mode de réalisation de l'invention.
- La figure 2a montre une vue de dessus schématique d'un dispositif de détection de gaz ou de particules selon un premier mode de réalisation de l'invention.
- La figure 2b montre une vue de dessus schématique d'un dispositif de détection de gaz ou de particules selon un deuxième mode de réalisation de l'invention.
- La figure 3a montre un graphique de l'absorptivité en fonction de la longueur d'onde dans l'exemple d'un gaz de $N_2O$, pour une concentration et une longueur d'interaction données.
- La figure 3b montre un graphique de l'absorptivité en fonction de la longueur d'onde dans l'exemple d'un gaz de $NH_3$, pour une concentration et une longueur de cavité données.
- La figure 4a montre un graphique d'une fonction f en fonction de la période P d'un réseau de diffraction dans l'exemple du gaz de $N_2O$.
- La figure 4b montre un graphique d'une fonction f en fonction de la période P d'un réseau de diffraction dans l'exemple du gaz de $NH_3$.
- La figure 5a montre un graphique des termes d'une suite $(P_m)$ dans l'exemple du gaz de $N_2O$.
- La figure 5b montre un graphique des termes d'une suite $(P_m)$ dans l'exemple du gaz de $NH_3$.
- La figure 6a montre, dans l'exemple du gaz de $N_2O$, plusieurs graphiques de la fonction f pour plusieurs valeurs différentes de longueur de cavité.
- La figure 6b montre, dans l'exemple du gaz de $NH_3$, plusieurs graphiques de la fonction f pour plusieurs valeurs différentes de longueur de cavité.
- Les figures 7a à 7f montrent des étapes d'un procédé de fabrication d'une première partie d'un dispositif de détection de gaz ou de particules selon un aspect de l'invention.
- Les figures 8a à 8e montrent des étapes d'un procédé de fabrication d'une deuxième partie d'un dispositif de détection de gaz ou de particules selon un aspect de l'invention.
- La figure 9 montre une étape d'assemblage de la première partie obtenue à l'issue des étapes des figures 7a à 7f avec la deuxième partie obtenue à l'issue des étapes 8a à 8e, pour l'obtention d'un dispositif de détection de gaz ou de particules selon un aspect de l'invention.
- La figure 10 montre particulièrement une étape d'ouverture d'évents au sein d'un dispositif de détection de gaz ou de particules selon un aspect de l'invention.
- La figure 11a est une vue en coupe montrant en particulier un premier évent débouchant dans une cavité d'un dispositif de détection de gaz ou de particules selon un aspect de l'invention.
- La figure 11b est une vue en coupe montrant en particulier un deuxième évent débouchant dans une cavité d'un dispositif de détection de gaz ou de particules selon un aspect de l'invention.

## DESCRIPTION DETAILLEE D'AU MOINS UN MODE DE REALISATION DE L'INVENTION

Sauf précision contraire, un même élément apparaissant sur des figures différentes présente une référence unique.

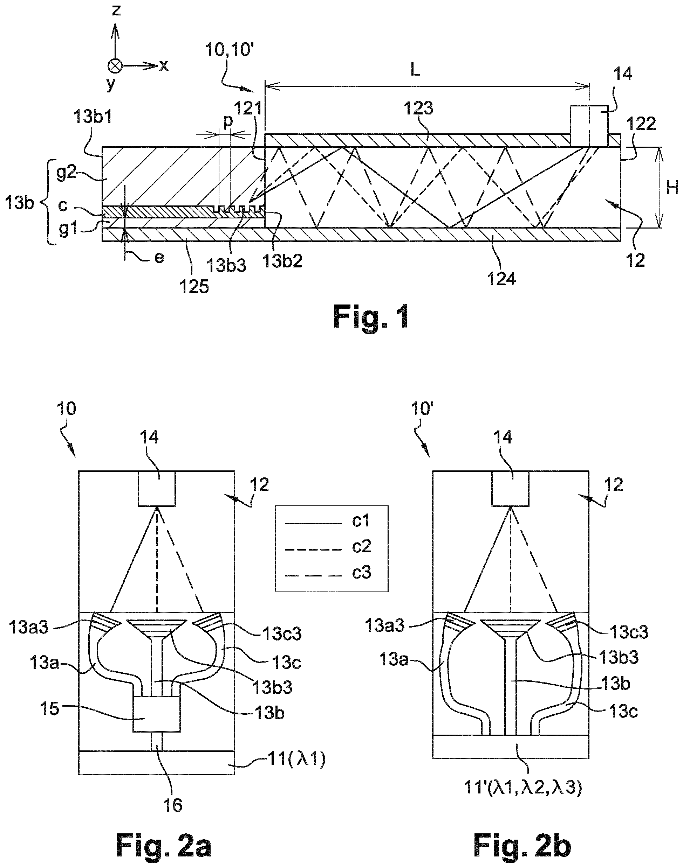

La figure 1 montre une vue en coupe schématique d'un dispositif de détection de gaz ou de particules 10 selon un premier mode de réalisation de l'invention, ou 10' selon un deuxième mode de réalisation de l'invention. La figure 2a montre une vue de dessus schématique du dispositif de détection de gaz ou de particules 10 selon le premier mode de réalisation de l'invention. La figure 2b montre une vue de dessus schématique du dispositif de détection de gaz ou de particules 10' selon le deuxième mode de réalisation de l'invention. Les figures 1, 2a et 2b sont décrites conjointement.

Le dispositif de détection de gaz ou de particules 10 selon le premier mode de réalisation ou 10' selon le deuxième mode de réalisation comporte :

- une source lumineuse 11, 11' pour l'émission d'un faisceau lumineux,
- une cavité 12 d'interaction de gaz ou de particules avec le faisceau lumineux, de longueur L et de hauteur H, comportant une première paroi réfléchissante 123 et une seconde paroi réfléchissante 124 sensiblement parallèles entre elles et ayant un taux de réflexion R,
- une pluralité de guides d'ondes optiques monomodes, par exemple des premier, deuxième et troisième guides d'ondes optiques monomodes 13a, 13b, 13c, couplée à une première extrémité 121 de la cavité 12 d'interaction, et
- un détecteur 14 couplé à une deuxième extrémité 122 de la cavité 12 d'interaction.

La pluralité de guides d'ondes optiques monomodes pourrait alternativement comporter seulement deux guides d'ondes optiques monomodes, ou quatre guides d'ondes optiques monomodes ou plus.

Chaque guide d'onde optique monomode 13a, 13b, 13c est un guide solide, comportant un cœur solide entouré d'une gaine. En particulier, chaque guide d'onde optique monomode 13a, 13b, 13c présente typiquement une couche de cœur c intercalée entre des première et seconde couches de gaine g1, g2. Chaque guide d'onde optique monomode 13a, 13b, 13c présente :

- une première extrémité 13a1, 13b1, 13c1 de largeur l1 qui est couplée optiquement à la source lumineuse 11, 11', et
- une deuxième extrémité 13a2, 13b2, 13c2 de largeur l2 supérieure à la largeur l1 qui est couplée optiquement à une première extrémité 121 de la cavité 12 d'interaction.

Chaque guide d'onde optique 13a, 13b, 13c comporte, dans sa deuxième extrémité de largeur l2, un réseau de diffraction 13a3, 13b3, 13c3 ayant un pas P choisi pour minimiser la norme de l'équation f suivante :

$$f(P) = ln\left(1 + \frac{\alpha HC}{\sqrt{n^2 - \left(n_{eff} - \frac{\lambda}{P}\right)^2} \, ln\left(\frac{1}{R}\right)}\right)\sqrt{1 - n^2 + \left(n_{eff} - \frac{\lambda}{P}\right)^2} - \alpha LC$$

où :

- $\lambda$ est la longueur d'onde du faisceau lumineux propagé dans le guide d'onde optique associé audit réseau de diffraction,
- $n$ est l'indice de la gaine du guide d'onde optique associé audit réseau de diffraction,
- $n_{eff}$ est l'indice effectif du mode propagé dans le guide d'onde optique associé au réseau de diffraction,
- $C$ est la concentration du type de gaz ou de particules à détecter, et
- $\alpha$ est un paramètre d'interaction du type de gaz ou de particules à détecter avec le faisceau lumineux.

Dans l'exemple de la figure 1, les largeurs l1 et l2 du guide d'onde 13b sont mesurées suivant un axe y, la longueur L de la cavité 12 et le pas P du réseau de diffraction 13b3 sont mesurés suivant un axe x et la hauteur H de la cavité 12 est mesurée suivant un axe z, les axes x, y et z étant perpendiculaires entre eux. La longueur L est définie entre la première extrémité 121 et le milieu du détecteur 14. Les réseaux de diffraction 13a3, 13b3, 13c3 des figures 1, 2a, 2c sont agencés sensiblement parallèlement à un même plan (Oxy) défini par les axes x et y.

Une première partie des rayons lumineux diffractés par chaque réseau de diffraction est typiquement orientée vers le haut, c'est-à-dire vers la première paroi réfléchissante 123, tandis qu'une deuxième partie des rayons lumineux diffractés par chaque réseau de diffraction est orientée vers le bas, c'est-à-dire vers la seconde paroi réfléchissante 124, avec, en valeur absolue, le même angle d'extraction que la première partie des rayons lumineux. Cette situation peut présenter l'inconvénient que plusieurs trajets optiques cohabitent dans la cavité pour une même longueur d'onde, et/ou qu'une partie des rayons lumineux extraits de chaque réseau de diffraction ne pénètre pas dans la cavité ou n'atteint pas le détecteur et est perdue. Pour y remédier, la première couche de gaine g1 est avantageusement agencée sur une couche réfléchissante 125 et présente une épaisseur e telle que :

$$\frac{\lambda_{moy}}{8n} \le e \le \frac{3\lambda_{moy}}{8n}$$

où $\lambda_{moy}$ est la longueur d'onde moyenne de l'ensemble des longueurs d'onde utilisées et n est l'indice de la première couche de gaine g1. Les rayons lumineux extraits «vers le bas », c'est-à-dire vers la couche réfléchissante 125, se réfléchissent sur la couche réfléchissante 125 et repartent dans la même direction que les rayons lumineux extraits « vers le haut », c'est-à-dire vers la première paroi réfléchissante 123, tout en étant en interférence constructive avec eux compte-tenu du choix de l'épaisseur e, d'épaisseur optique proche du quart de la longueur d'onde moyenne. Les rayons lumineux extraits d'un réseau de diffraction donné et qui pénètrent dans la cavité ont donc tous le même angle d'extraction et suivent tous le même trajet optique, car la faible épaisseur e permet également d'éviter un décalage latéral significatif entre les rayons réfléchis et non réfléchis. En outre, le phénomène d'interférence constructive permet d'optimiser la puissance de la source lumineuse.

L'épaisseur e de la première couche de gaine g1 est préférentiellement sensiblement égale à $\lambda_{moy}/4n$.

L'épaisseur de la deuxième couche de gaine g2 est typiquement choisie de manière que l'épaisseur totale de chaque guide d'onde soit sensiblement égale à la hauteur H de la cavité. La deuxième couche de gaine g2 est ainsi typiquement au moins 5 fois plus épaisse, voire au moins 10 fois plus épaisse, voire au moins 100 fois plus épaisse que la première couche de gaine g1. Dans l'exemple de la figure 1, l'épaisseur des première et deuxième couches de gaine g1, g2 ainsi que l'épaisseur des guides optiques sont mesurées suivant l'axe z. La couche réfléchissante 125 et la seconde paroi réfléchissante 124 peuvent former un unique élément réfléchissant, ou alternativement être deux éléments réfléchissants distincts agencés dans le prolongement l'un de l'autre.

D'une manière générale, le choix du pas détermine la longueur d'interaction lumière-matière et on choisit un chemin d'autant plus court que la concentration de l'élément à détecter est importante, et d'autant plus long que la concentration de l'élément à détecter est faible. Dans l'exemple des figures 1, 2a et 2b, le réseau de diffraction 13a3 est associé à un premier chemin optique c1 ; le réseau de diffraction 13b3 est associé à un deuxième chemin optique c2 plus long que le premier chemin optique c1 ; le réseau de diffraction 13c3 est associé à un troisième chemin optique c3 plus long que les premier et deuxième chemins optiques c1, c2.

Dans le cas de la détection de gaz, le paramètre d'interaction $\alpha$ est typiquement une absorptivité d'un type de gaz à détecter. Dans le cas de la détection de particules, le paramètre d'interaction $\alpha$ est typiquement une diffusivité d'un type de particules à détecter. D'une manière générale, tout élément ayant des propriétés d'absorption peut être directement détecté au moyen d'un dispositif de détection par atténuation de lumière ou au moyen d'un dispositif de détection par effet photoacoustique ; tout élément ayant des propriétés de diffusivité peut être directement détecté au moyen d'un dispositif de détection par atténuation de lumière, mais pas au moyen d'un dispositif de détection par effet photoacoustique.

Dans le cas d'un dispositif de détection par atténuation de lumière :

- la cavité d'interaction est une cavité optique,
- le détecteur 14 est un détecteur de lumière tel qu'un photomultiplicateur, une photodiode, ou un détecteur thermique.
- chaque réseau de diffraction, qui comporte une pluralité de motifs parallèles entre eux et espacés d'un pas P, est orienté au sein du plan (Oxy) de manière que sa pluralité de motifs soit perpendiculaire à une direction radiale relativement au détecteur 14 - sur les figures 2a et 2b, les premier, deuxième et troisième chemins optiques c1, c2, c3 sont représentés suivant une direction radiale relativement au détecteur 14, et
- le pas P de chaque réseau de diffraction appartient à la suite $(P_m)$, avec m un entier naturel, telle que :

$$P_m = \cfrac{\lambda}{n_{eff} - \sqrt{n^2 - \cfrac{(2m+1)^2}{(2m+1)^2 + \left(\frac{L}{H}\right)^2}}}$$

Dans le cas d'un dispositif de détection par atténuation de lumière, le pas P de chaque réseau de diffraction est donc avantageusement le membre de la suite $(P_m)$ qui minimise la norme de la fonction f. On garantit ainsi que tous les chemins optiques aboutissent au détecteur 14, tout en optimisant la sensibilité du dispositif de détection pour des conditions expérimentales particulières.

Dans le cas d'un dispositif de détection par effet photoacoustique, le détecteur 14 est un détecteur acoustique tel qu'un microphone et l'orientation des différents réseaux de diffraction est indifférente. Le pas P de chaque réseau de diffraction est donc avantageusement choisi tel que f(P) = 0.

Selon le premier mode de réalisation, la source lumineuse 11 émet un faisceau lumineux à une unique longueur d'onde, et le couplage optique entre chaque guide d'onde optique monomode et la source lumineuse 11 est réalisé via un interféromètre multimode. La figure 2a illustre en particulier un exemple conforme au premier mode de réalisation, selon lequel :

- la source lumineuse 11 émet un faisceau lumineux à une unique longueur d'onde $\lambda_1$,
- le couplage optique entre chaque guide d'onde optique monomode 13a, 13b, 13c et la source lumineuse 11 est réalisé via un interféromètre multimode 15, et
- le couplage optique entre la source lumineuse 11 et l'interféromètre multimode 15 est réalisé via un guide d'entrée 16.

Le dispositif de détection 10 selon le premier mode de réalisation permet avantageusement de détecter un même type d'élément, caractérisé par ses propriétés d'absorption ou par ses propriétés de diffusion, sur une grande plage continue ou discontinue de concentration [$c_{min}$ ; $c_{max}$] telle que $c_{max}/c_{min} \geq 10^k$ avec k le nombre de réseaux de diffraction, en choisissant pour chaque réseau de diffraction 13a3, 13b3, 13c3 un pas adapté à une certaine plage de concentration restreinte du type d'élément à détecter, la réunion des plages de concentration restreintes formant la grande plage continue ou discontinue de concentration. Chaque plage de concentration restreinte s'étend typiquement sur un intervalle [$c_{Rmin}$ ; $c_{Rmax}$] tel que $C_{Rmax}/C_{Rmin} \leq 10$. Lorsque les plages de concentration restreintes sont contiguës voire se recouvrent partiellement, leur réunion forme une grande plage continue de concentration. Lorsque les plages de concentration restreintes sont disjointes donc ne se recouvrent pas, leur réunion forme une grande plage discontinue de concentration. Ce dernier cas présente notamment un intérêt pour la détection d'un même type d'élément à des concentrations très différentes : par exemple, la détection d'un même type d'élément dans deux applications très différentes, comme une émanation industrielle ou une qualité d'air ambiant. Le dispositif de détection 10 selon le premier mode de réalisation de l'invention permet alternativement de détecter plusieurs types d'éléments différents caractérisés par leurs propriétés de diffusion, sur une plage de concentration restreinte donnée, en choisissant pour chaque réseau de diffraction 13a3, 13b3, 13c3 un pas adapté à chaque type d'élément sur la plage de concentration restreinte considérée.

Selon une variante du premier mode de réalisation, le dispositif de détection 10 comporte au moins une première pluralité et une deuxième pluralité de guides d'ondes optiques tels que précédemment décrits, les pas des réseaux de diffraction de la première pluralité de guides d'ondes étant choisis pour permettre la détection d'un premier type d'élément caractérisé par ses propriétés de diffusion sur une large plage de concentration telle que précédemment décrite, et les pas des réseaux de diffraction de la deuxième pluralité de guides d'ondes étant choisis pour permettre la détection d'un deuxième type d'élément caractérisé par ses propriétés de diffusion sur une large plage de concentration telle que précédemment décrite.

Selon le deuxième mode de réalisation, la source lumineuse 11' émet un faisceau lumineux à au moins deux longueurs d'onde distinctes, chaque longueur d'onde correspondant à une longueur d'onde d'absorption d'un élément à détecter, et chaque guide d'onde optique monomode est directement couplé à la source lumineuse 11'. La figure 2b illustre en particulier un exemple conforme au deuxième mode de réalisation, selon lequel :

- la source lumineuse 11' émet un faisceau lumineux à au moins trois longueurs d'onde distinctes $\lambda_1$, $\lambda_2$ et $\lambda_3$, chaque longueur d'onde correspondant à une longueur d'onde d'absorption d'un élément à détecter,
- chaque guide d'onde optique monomode 13a, 13b, 13c est directement couplé à la source lumineuse 11'.

La source lumineuse 11' selon le deuxième mode de réalisation pourrait alternativement n'émettre un faisceau lumineux qu'à au moins deux longueurs d'onde distinctes $\lambda_1$ et $\lambda_2$, ou à quatre longueurs d'onde distinctes ou plus. La source lumineuse 11' selon le deuxième mode de réalisation peut comporter une pluralité de sources distinctes, chaque source distincte émettant un faisceau lumineux à une unique longueur d'onde. Dans ce cas, chaque guide d'onde est couplé à une unique source et reçoit une seule longueur d'onde. Selon ce cas, la source lumineuse est préférentiellement une barrette de lasers à cascade quantique, ou barrette QCL (de l'anglais « Quantum Cascade Laser »), multi-longueur d'onde. Alternativement, la source lumineuse 11' selon le deuxième mode de réalisation peut être une unique source lumineuse accordable dans le temps en longueur d'onde. Dans cette alternative, la source accordable est couplée à tous les guides d'ondes, et chaque guide d'onde reçoit la pluralité de longueurs d'onde émise par la source accordable. On déduit alors de l'instant de détection, la longueur d'onde injectée à cet instant et donc l'élément mesuré à cet instant.

Le dispositif de détection de gaz ou de particules 10' selon le deuxième mode de réalisation permet avantageusement de détecter plusieurs types d'éléments différents caractérisés par leurs propriétés d'absorption sur une certaine plage de concentration restreinte [$c_{min}$ ; $c_{max}$] telle que $c_{max}/c_{min} \leq 10$, en choisissant pour chaque réseau de diffraction 13a3, 13b3, 13c3 un pas distinct adapté à ladite plage de concentration restreinte pour chaque type d'élément à détecter. En effet, le paramètre d'absorptivité d'un rayonnement incident par un élément dépend fortement de la longueur d'onde du rayonnement incident.

Selon une variante du deuxième mode de réalisation :

- la source lumineuse 11' émet un faisceau lumineux à au moins une première longueur d'onde $\lambda_1$ correspondant à une longueur d'absorption d'un premier élément à détecter, et une deuxième longueur d'onde $\lambda_2$ distincte de $\lambda_1$ et correspondant à une longueur d'onde d'absorption d'un deuxième élément à détecter, et
- le dispositif de détection 10' comporte au moins des première et deuxième pluralités de guides d'ondes optiques tels que précédemment décrits, les pas des réseaux de diffraction de la première pluralité de guides d'ondes étant choisis pour permettre la détection du premier élément à détecter sur une large plage de concentration telle que précédemment décrite, et les pas des réseaux de diffraction de la deuxième pluralité de guides d'ondes étant choisis pour permettre la détection du deuxième élément à détecter sur une large plage de concentration telle que précédemment décrite.

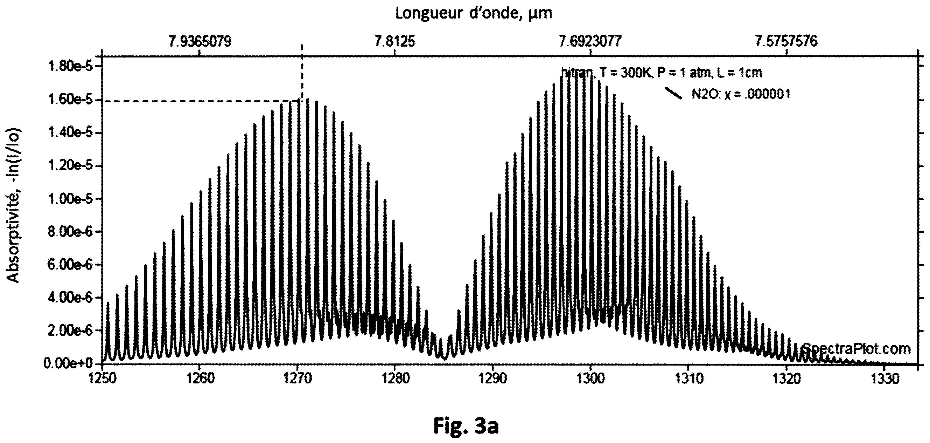

Les figures 3a, 3b, 4a, 4b, 5a, 5b, 6a, 6b décrivent un exemple de dimensionnement d'un dispositif de détection selon un aspect de l'invention, devant servir à la détection de deux gaz : un gaz de $N_2O$ et un gaz de $NH_3$.

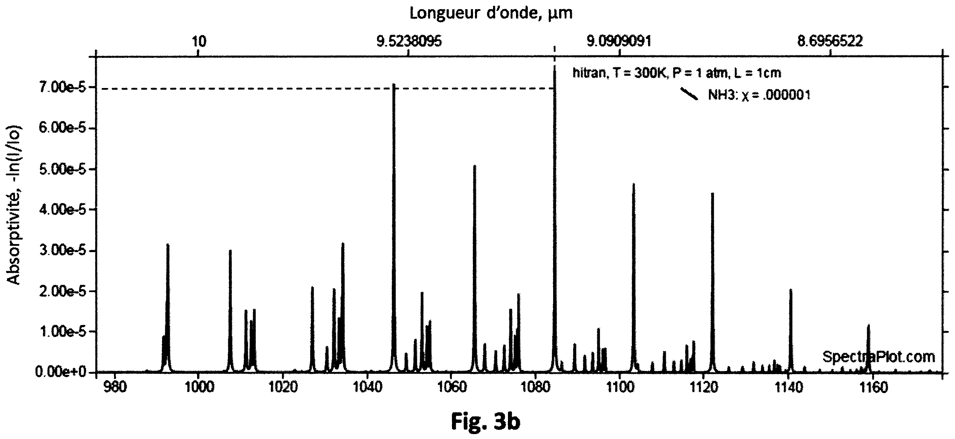

La figure 3a montre un graphique de l'absorptivité du gaz de $N_2O$ en fonction de la longueur d'onde, pour une concentration de 1 ppm et une longueur d'interaction de 1 cm. La figure 3b montre un graphique de l'absorptivité du gaz de $NH_3$ en fonction de la longueur d'onde, également pour une concentration de 1 ppm et une longueur d'interaction de 1 cm. Le graphique de la figure 3a permet de déterminer une longueur d'onde d'intérêt $\lambda_{N2O}$ pour le gaz de $N_2O$, telle que $\lambda_{N2O} = 7,85~\mu m$, correspondant à une absorptivité $\alpha_{N2O}$ de $1,6e^{-5}$ ppm$^{-1}$.cm$^{-1}$. De manière analogue, le graphique de la figure 3b permet de déterminer une longueur d'onde d'intérêt $\lambda_{NH3}$ pour le gaz de $NH_3$, telle que $\lambda_{NH3} = 9,22~\mu m$, correspondant à une absorptivité $\alpha_{NH3}$ de $7e^{-5}$ ppm$^{-1}$.cm$^{-1}$.

Il est possible d'utiliser plusieurs longueurs d'onde pour chaque gaz ou élément à détecter, chaque longueur d'onde correspondant à un pic d'absorption différent du gaz ou élément à détecter. Cela permet de diminuer ou supprimer le risque de faux positif lors de la détection, qui existe lorsque deux gaz différents ont un ou plusieurs pics d'absorption en commun.

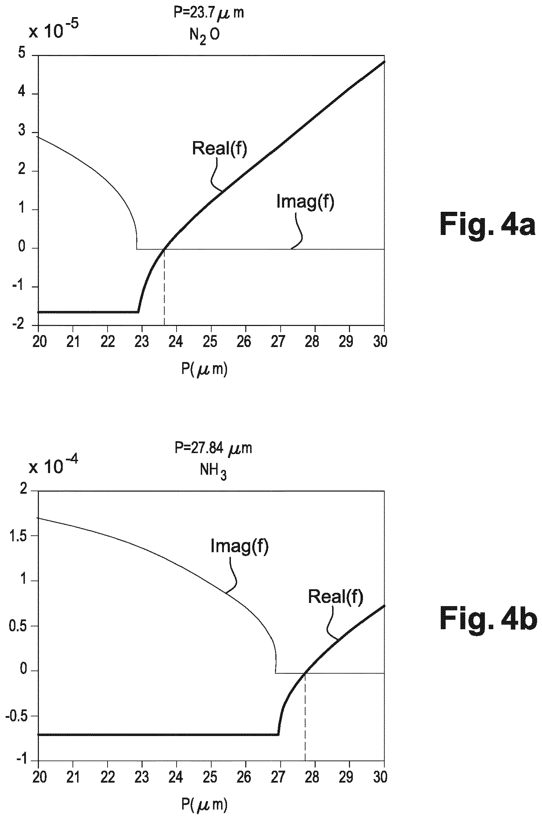

Dans cet exemple, chaque guide d'onde optique monomode a un cœur en Ge, d'indice $n_c = 4$, et une gaine en SiGe avec 40% de Ge, d'indice $n = 3,6$, et est transparent aux longueurs d'onde d'intérêt. Pour la technologie et les longueurs d'onde d'intérêt considérées, on choisit typiquement une épaisseur de $2,5~\mu m$ pour chaque guide d'onde optique. L'indice effectif du mode propagé au sein de chaque guide d'onde optique est sensiblement égal à 3,8. On considère une cavité de hauteur $H = 725~\mu m$, correspondant à l'épaisseur d'un substrat silicium, et de longueur $L = 1$ cm. On considère un taux de réflexion de 98% pour les première et deuxième parois réfléchissantes de la cavité, caractéristique de l'or aux longueurs d'onde d'intérêt. Enfin, on vise une concentration typique de détection de 1 ppm pour chacun des deux gaz d'intérêt. La figure 4a montre un graphique de la fonction f, avec sa partie réelle Real(f) et sa partie imaginaire Imag(f), en fonction de la période P d'un réseau de diffraction, pour un gaz de $N_2O$ avec les paramètres choisis ci-dessus. La figure 4b montre un graphique de la fonction f, avec sa partie réelle Real(f) et sa partie imaginaire Imag(f), en fonction de la période P d'un réseau de diffraction, pour un gaz de $NH_3$ avec les paramètres choisis ci-dessus. Une partie imaginaire non nulle signifie que le faisceau lumineux extrait par le réseau de diffraction subit une réflexion totale interne à l'interface entre le guide d'onde optique solide et la cavité creuse, remplie d'air. Le graphique de la figure 4a permet de déterminer la période $P_{N2O}$ telle que $f(P_{N2O}) = 0$ : $P_{N2O} = 23,7~\mu m$. De manière analogue, le graphique de la figure 4b permet de déterminer la période $P_{NH3}$ telle que $f(P_{NH3}) = 0$ : $P_{NH3} = 27,84~\mu m$.

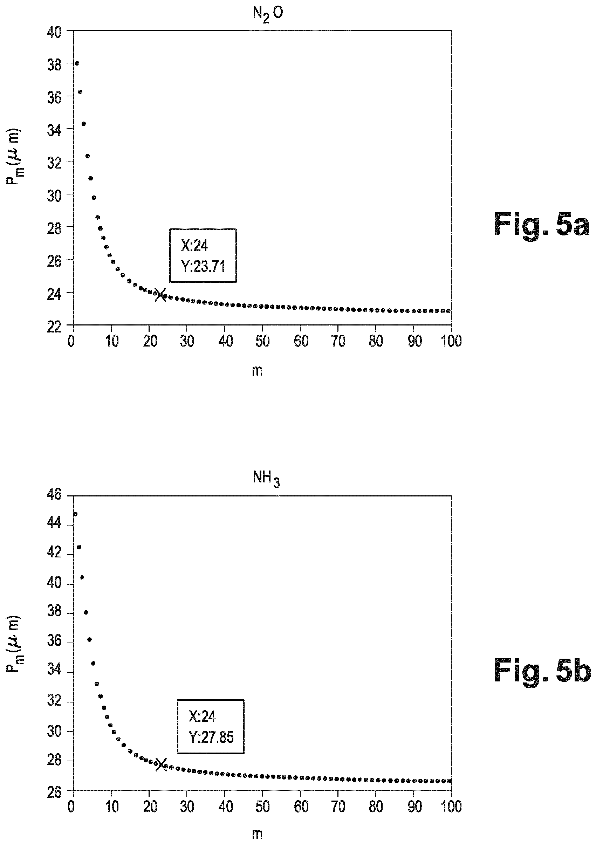

Dans le cas particulier d'un dispositif de détection par atténuation de lumière, il s'agit à présent de rechercher, pour chaque gaz, la période du réseau de diffraction appartenant à la suite $(P_m)$ qui est la plus proche de la période annulant la fonction f. Pour ce faire, la figure 5a montre un graphique des termes de la suite $(P_m)$ en fonction de m dans l'exemple du gaz de $N_2O$ avec les paramètres choisis ci-dessus, et la figure 5b montre un graphique des termes de la suite $(P_m)$ en fonction de m dans l'exemple du gaz de $NH_3$ avec les paramètres choisis ci-dessus. Le graphique de la figure 5a permet de déterminer la période $P_{N2O\_d}$ appartenant à la suite $(P_m)$ et minimisant la norme de la fonction f dans le cas du gaz de $N_2O$ : $P_{N2O\_d} = 23,71~\mu m$ pour m=24. De manière analogue, le graphique de la figure 5b permet de déterminer la période $P_{NH3\_d}$ appartenant à la suite $(P_m)$ et minimisant la norme de la fonction f dans le cas du gaz de $NH_3$: $P_{NH3\_d} = 27,85~\mu m$.

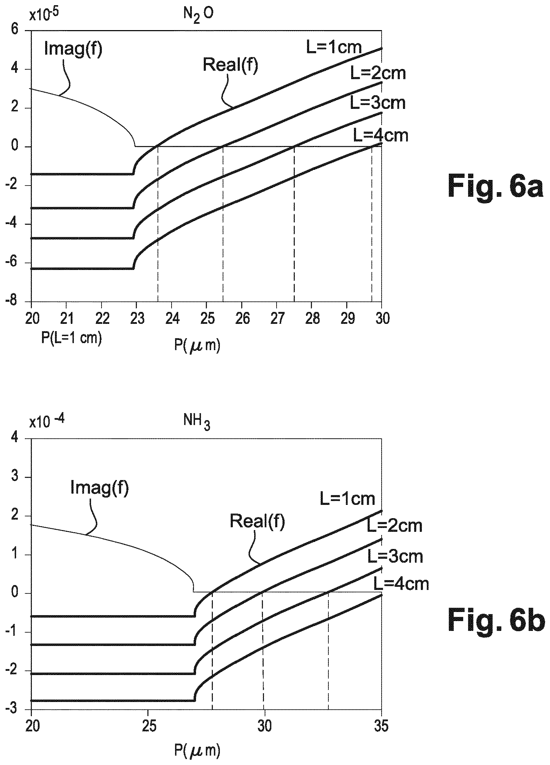

Les figures 6a et 6b montrent l'impact d'une variation de la longueur L de la cavité sur la période à choisir, dans le cas du gaz de $N_2O$ et dans celui du gaz de $NH_3$, respectivement. Une augmentation de la longueur L de la cavité entraîne une augmentation de la période des réseaux de diffraction requise.

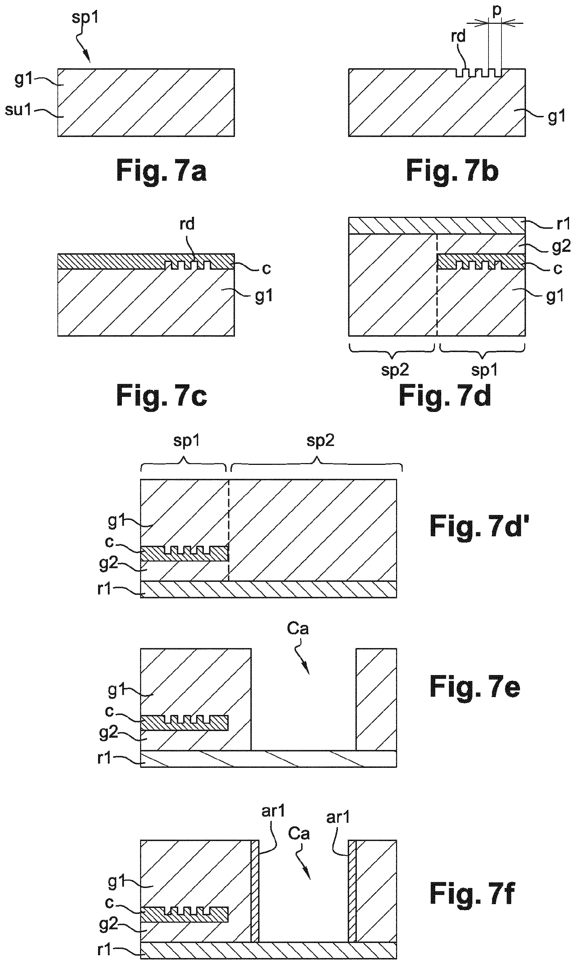

Les figures 7a à 7f, 8a à 8e et 9, qui montrent des étapes d'un procédé de fabrication 100 d'un dispositif de détection de gaz ou de particules selon un mode de réalisation de l'invention, sont à présent décrites.

La figure 7a montre un premier substrat su1, par exemple un substrat silicium pour utiliser ultérieurement une lumière d'interaction infrarouge, ou un substrat en verre $SiO_2$ pour utiliser ultérieurement une lumière d'interaction visible. Le premier substrat su1 présente une première partie sp1 et une deuxième partie sp2. La première partie sp1 forme une première couche de gaine g1 d'un guide d'onde optique.

La figure 7b montre une étape de gravure, dans une première partie sp1 du premier substrat su1, d'un réseau de diffraction rd présentant un pas P.

La figure 7c montre une étape de dépôt, sur la première couche de gaine g1 et sur le réseau de diffraction rd gravé dans la première couche de gaine g1, d'une couche de cœur c du guide d'onde optique. La couche de cœur est par exemple une couche de Ge lorsque le premier substrat est réalisé en Si, ou une couche de de nitrure de silicium lorsque le premier substrat est réalisé en $SiO_2$. Une étape de planarisation mécano-chimique CMP peut être prévue à l'issue de l'étape 7c de dépôt.

La figure 7d montre une étape de dépôt, sur la couche de cœur c et sur la deuxième partie sp2 du premier substrat su1, d'une couche quart d'onde, par exemple en SiGe lorsque la couche de cœur est réalisée en Ge, qui forme une deuxième couche de gaine g2 à l'aplomb de la couche de cœur c. La figure 7d montre également une étape de dépôt, sur la couche quart d'onde, d'une première couche réfléchissante r1, par exemple métallique. Même si les représentations en coupe des figures 7a à 7d ne montrent qu'un seul guide d'onde optique, une pluralité de guides d'ondes optiques sont réalisés lors de ces étapes.

La figure 7d' montre une étape de retournement du dispositif de la figure 7d.

La figure 7e montre une étape de gravure d'une cavité Ca dans la deuxième partie du premier substrat su1, de manière à déboucher sur la première couche réfléchissante r1. A ce stade, la cavité Ca comporte une paroi formée par le premier substrat su1 et une paroi formée par la première couche réfléchissante r1.

La figure 7f montre, dans le cas d'une utilisation ultérieure de lumière d'interaction infrarouge, une étape de dépôt d'une première couche antireflet ar1 sur la paroi de la cavité Ca formée par le premier substrat su1. Cette étape est facultative dans le cas d'une utilisation ultérieure de lumière d'interaction visible. La première couche antireflet ar1 est typiquement déposée à la fois sur la paroi de la cavité Ca formée par le premier substrat su1 et sur la paroi de la cavité Ca formée par la première couche réfléchissant r1, puis retirée de la paroi formée par la première couche réfléchissante r1 par une technique de gravure ionique anisotrope.

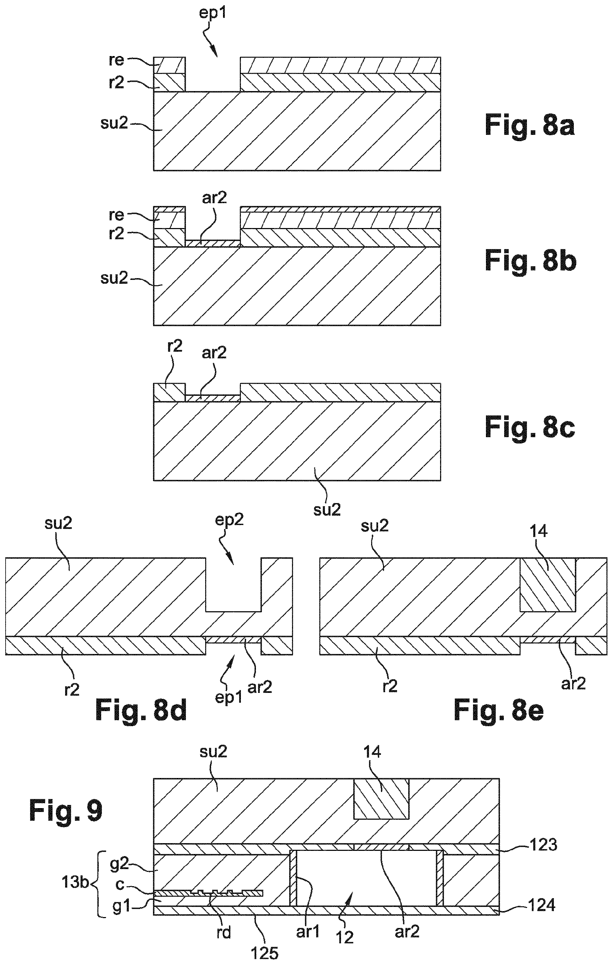

La figure 8a montre un deuxième substrat su2, par exemple un substrat silicium pour utiliser ultérieurement une lumière d'interaction infrarouge, ou un substrat en verre $SiO_2$ pour utiliser ultérieurement une lumière d'interaction visible. Une deuxième couche réfléchissante r2 est déposée sur le deuxième substrat su2 puis un premier emplacement ep1 débouchant sur le deuxième substrat su2 est ouvert dans la deuxième couche réfléchissante r2, en utilisant un masque de résine re.

La figure 8b montre, dans le cas d'une utilisation ultérieure de lumière d'interaction infrarouge, une étape de dépôt d'une deuxième couche antireflet ar2 dans le premier emplacement ep1. Cette étape est facultative dans le cas d'une utilisation ultérieure de lumière d'interaction visible. La deuxième couche antireflet ar2 est typiquement déposée à la fois dans le premier emplacement ep1 et sur le masque de résine re, puis le masque de résine re est retiré lors d'une étape de lift-off.

La figure 8d montre une étape de retournement du dispositif de la figure 8b, suivie d'une étape de gravure, dans le deuxième substrat su2 et à l'aplomb du premier emplacement ep1, d'un deuxième emplacement ep2 destiné à recevoir le détecteur 14.

Lorsque l'étape 8b a été réalisée et qu'une deuxième couche antireflet ar2 a été déposée dans le premier emplacement ep1, le deuxième emplacement ep2 est gravé de manière à conserver un reliquat du deuxième substrat su2 à l'aplomb du premier emplacement ep1. Le reliquat du deuxième substrat su2 permet de protéger la couche antireflet ar2 en évitant qu'elle casse, tout en assurant un bon maintien mécanique ultérieur du détecteur 14, lorsqu'il est agencé dans le deuxième emplacement ep2. Le reliquat du deuxième substrat su2 fait de préférence au moins 10 μm d'épaisseur.

Lorsque l'étape 8b n'a pas été réalisée, le deuxième emplacement ep2 est préférentiellement gravé de manière à conserver le reliquat du deuxième substrat su2, tel que précédemment décrit. Un bon maintien mécanique ultérieur du détecteur 14 est ainsi assuré. Alternativement, le deuxième emplacement ep2 peut être gravé à l'aplomb du premier emplacement ep1 de manière à traverser le deuxième substrat su2 et à déboucher sur le premier emplacement ep1. Dans cette alternative, on prévoit un moyen de maintien du détecteur 14 afin qu'il ne pénètre pas dans la cavité 12.

La figure 8e montre une étape d'agencement du détecteur 14 dans le deuxième emplacement ep2.

La figure 9 montre une étape d'assemblage du dispositif obtenu à l'issue des étapes des figures 7a à 7f avec le dispositif obtenu à l'issue des étapes 8a à 8e, pour l'obtention d'un dispositif de détection de gaz ou de particules 10, 10' selon un aspect de l'invention. L'assemblage est typiquement une étape de scellement eutectique Si/Au. Les premier et deuxième substrats su1, su2 sont assemblés de manière que les première et deuxième couches réfléchissantes r1, r2 se trouvent en regard l'une de l'autre, formant ainsi les première et seconde parois réfléchissantes 123, 124 de la cavité 12 telle que précédemment décrite. Les premier et deuxième emplacements ep1, ep2 sont alignés et à l'aplomb de la cavité 12. La couche de cœur intercalée entre les première et deuxième couches de gaine g1, g2 et comportant le réseau de diffraction rd à l'interface entre la couche de cœur c et la première couche de gaine g1 forme le guide d'onde optique 13b tel que précédemment décrit. Alternativement, chaque réseau de diffraction rd pourrait être situé à l'interface entre la couche de cœur c et la deuxième couche de gaine g2. Dans cette alternative, chaque réseau de diffraction n'est pas gravé dans la première couche de gaine g1 mais dans la couche de cœur c qui est déposée sur la première couche de gaine g1.

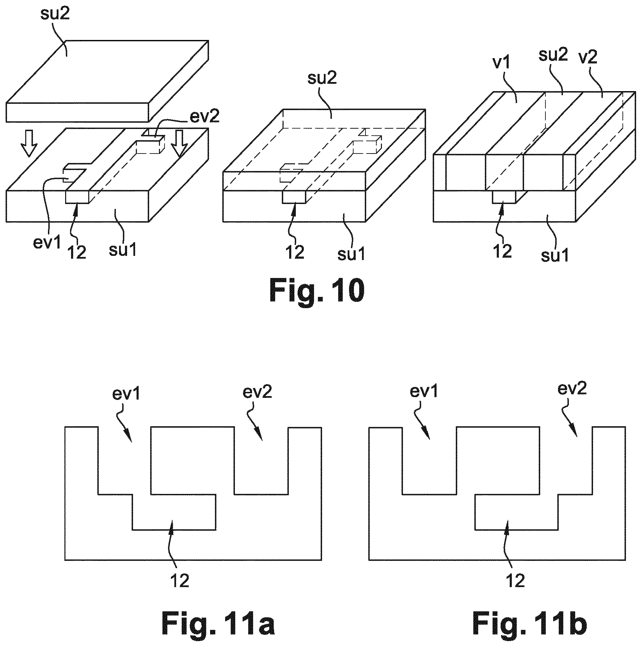

La figure 10 montre particulièrement une étape d'ouverture d'évents au sein d'un dispositif de détection de gaz ou de particules selon un aspect de l'invention. Des premier et deuxième évents ev1, ev2 sont gravés dans la deuxième partie du premier substrat su1, de manière qu'ils débouchent sur la cavité Ca. La cavité et les évents sont typiquement réalisés en même temps, lors d'une même étape technologique. L'assemblage des premier et deuxième substrats su1, su2 ferme la cavité et les premier et deuxième évents. Il est alors prévu une étape de gravure d'un premier volume v1 du deuxième substrat su2 de manière à ouvrir le premier évent ev1, et de gravure d'un deuxième volume v2 du deuxième substrat su2 de manière à ouvrir le deuxième évent ev2.

La figure 11a est une vue en coupe montrant en particulier le premier évent ev1 débouchant dans la cavité 12 d'un dispositif de détection de gaz ou de particules 10, 10' selon un aspect de l'invention, après l'étape de gravure des premier et deuxième volumes v1, v2, décrite à la figure 10. La figure 11b est une vue en coupe montrant en particulier le deuxième évent ev2 débouchant dans la cavité 12 d'un dispositif de détection de gaz ou de particules 10, 10' selon un aspect de l'invention, après l'étape de gravure des premier et deuxième volumes v1, v2, décrite à la figure 10.

**Revendications**

1.  Dispositif (10, 10') de détection de gaz ou de particules comportant :

    - une source lumineuse (11, 11') apte à émettre un faisceau lumineux à au moins une longueur d'onde,
    - une cavité (12) d'interaction de gaz ou de particules avec le faisceau lumineux comportant des première et seconde parois réfléchissantes (123, 124) sensiblement parallèles entre elles et en regard l'une de l'autre,
    - une pluralité de guides d'ondes optiques monomodes (13a, 13b, 13c) ayant chacun une première extrémité (13a1, 13b1, 13c1) de largeur l1 couplée optiquement à la source lumineuse et une deuxième extrémité (13a2, 13b2, 13c2) de largeur l2, supérieure à la largeur l1, couplée optiquement à une première extrémité (121) de la cavité d'interaction, chaque guide d'onde optique comportant dans sa deuxième extrémité de largeur l2 un réseau de diffraction (13a3, 13b3, 13c3) présentant un pas P distinct choisi en fonction de la longueur d'onde $\lambda$ du faisceau lumineux propagé dans le guide d'onde optique associé audit réseau de diffraction, de l'indice de gaine n du guide d'onde optique associé au réseau de diffraction, de l'indice effectif $n_{eff}$ du mode propagé dans le guide d'onde optique associé au réseau de diffraction, de la longueur L et de la hauteur H de la cavité, du taux de réflexion R des première et seconde parois réfléchissantes de la cavité pour le faisceau lumineux à la longueur d'onde $\lambda$, d'une concentration C d'un type de gaz ou de particules à détecter et d'un paramètre $\alpha$ d'interaction du type de gaz ou de particules à détecter avec le faisceau lumineux ;
    - et un détecteur (14) couplé à une deuxième extrémité (122) de la cavité d'interaction.

2.  Dispositif (10, 10') de détection de gaz ou de particules selon la revendication précédente **caractérisé en ce que** le pas P est choisi de manière à minimiser la norme de l'équation suivante :

$$f(P) = ln\left(1 + \frac{\alpha HC}{\sqrt{n^2 - \left(n_{eff} - \frac{\lambda}{P}\right)^2} \, ln\left(\frac{1}{R}\right)}\right) \sqrt{1 - n^2 + \left(n_{eff} - \frac{\lambda}{P}\right)^2} - \alpha LC$$

3.  Dispositif (10, 10') de détection de gaz ou de particules selon l'une quelconque des revendications précédentes **caractérisé en ce qu'**il comporte au moins un premier réseau de diffraction ayant un premier pas, et un deuxième réseau de diffraction ayant un deuxième pas distinct du premier pas.

4.  Dispositif (10, 10') de détection de gaz ou de particules selon l'une quelconque des revendications précédentes, dans lequel chaque guide d'onde optique monomode (13a, 13b, 13c) présente une couche de cœur (c) intercalée entre des première et seconde couches de gaine (g1, g2), **caractérisé en ce qu'**il comporte une couche réfléchissante (125) dans le prolongement de la deuxième paroi réfléchissante (124), et **en ce que** la première couche de gaine (g1) est agencée sur ladite couche réfléchissante (125) et présente une épaisseur e telle que :

$$\frac{\lambda_{moy}}{8n} \le e \le \frac{3\lambda_{moy}}{8n}$$

où $\lambda_{moy}$ est la longueur d'onde moyenne de l'ensemble des longueurs d'onde utilisées et n est l'indice de la première couche de gaine (g1).

5.  Dispositif (10, 10') de détection de gaz ou de particules selon l'une quelconque des revendications précédentes **caractérisé en ce qu'**il comporte des premier et deuxième évents (ev1, ev2) communiquant avec la cavité d'interaction (12).

6.  Dispositif (10, 10') de détection de gaz ou de particules selon l'une quelconque des revendications précédentes **caractérisé en ce que** :

    - la cavité d'interaction (12) est une cavité optique,

- le détecteur (14) est un détecteur de lumière et est agencé sensiblement parallèlement au plan de référence, dans le plan de la première paroi réfléchissante (123),
- le pas P de chaque réseau de diffraction appartient en outre à la suite ($P_m$), avec m un entier naturel, telle que :

$$P_m = \frac{\lambda}{n_{eff} - \sqrt{n^2 - \frac{(2m+1)^2}{(2m+1)^2 + \left(\frac{L}{H}\right)^2}}}$$

- les réseaux de diffraction s'étendent sensiblement suivant un même plan et chaque réseau de diffraction de pas P présente une pluralité de structures parallèles entre elles, espacées du pas P, et perpendiculaires à une direction radiale relativement au détecteur de lumière.

7. Dispositif (10, 10') de détection de gaz ou de particules selon l'une quelconque des revendications 1 à 5 **caractérisé en ce que** :

- la cavité d'interaction (12) est une cavité optique,
- le détecteur (14) est un détecteur de lumière et est agencé sensiblement parallèlement au plan de référence, dans le plan de la seconde paroi réfléchissante (124),
- le pas P de chaque réseau de diffraction appartient en outre à la suite ($P_m$), avec m un entier naturel, telle que :

$$P_m = \frac{\lambda}{n_{eff} - \sqrt{n^2 - \frac{(2m+2)^2}{(2m+2)^2 + \left(\frac{L}{H}\right)^2}}}$$

- les réseaux de diffraction s'étendent sensiblement suivant un même plan et chaque réseau de diffraction de pas P présente une pluralité de structures parallèles entre elles, espacées du pas P, et perpendiculaires à une direction radiale relativement au détecteur de lumière.

8. Dispositif (10') de détection de gaz selon l'une quelconque des revendications précédentes, **caractérisé en ce que** le paramètre d'interaction du type de gaz ou de particules à détecter avec le faisceau lumineux est un paramètre d'absorptivité $\alpha$ et **en ce que** la source lumineuse (11') est apte à émettre un faisceau lumineux à au moins une première longueur d'onde correspondant à une longueur d'onde d'absorption d'un premier gaz à détecter, et à au moins une deuxième longueur d'onde distincte de la première longueur d'onde et correspondant à une longueur d'onde d'absorption d'un deuxième gaz à détecter.

9. Procédé de fabrication d'un dispositif de détection de gaz ou de particules comportant une source lumineuse (11, 11') apte à émettre un faisceau lumineux à au moins une longueur d'onde À, une cavité (12) d'interaction de gaz ou de particules avec le faisceau lumineux comportant des première et seconde parois réfléchissantes (123, 124) sensiblement parallèles entre elles, une pluralité de guides d'ondes optiques monomodes (13a, 13b, 13c) ayant chacun une première extrémité (13a1, 13b1, 13c1) de largeur l1 couplée optiquement à la source lumineuse (11, 11') et une deuxième extrémité (13a2, 13b2, 13c2) de largeur l2, supérieure à la largeur l1, couplée optiquement à une première extrémité (121) de la cavité d'interaction, et un détecteur (14) couplé à une deuxième extrémité (122) de la cavité d'interaction, le procédé comportant au moins les étapes suivantes :

- dans une première partie (sp1) d'un premier substrat (su1), réalisation de la pluralité de guides d'ondes optiques monomodes, chaque guide d'onde optique comportant une couche de cœur (c) intercalée entre des première et seconde couches de gaine (g1, g2), ainsi qu'un réseau de diffraction (rd) agencé à une interface entre la couche de cœur et l'une des première ou seconde couches de gaine, chaque réseau de diffraction présentant un pas P distinct choisi en fonction de la longueur d'onde λ du faisceau lumineux propagé dans le guide d'onde optique associé audit réseau de diffraction, de l'indice de gaine n du guide d'onde optique associé au réseau de diffraction, de l'indice effectif $n_{eff}$ du mode propagé dans le guide d'onde optique associé au réseau de diffraction, de la longueur L et de la hauteur H de la cavité, du taux de réflexion R des première et seconde parois réfléchissantes de la cavité pour le faisceau lumineux à la longueur d'onde À, d'une concentration C d'un type de gaz ou de particules à détecter et d'un paramètre α d'interaction du type de gaz ou de particules à détecter avec le faisceau lumineux ;

- dépôt d'une première couche réfléchissante (r1) sur la pluralité de guides d'ondes optiques réalisée dans la première partie (sp1) du premier substrat (su1) et sur une deuxième partie (sp2) du premier substrat (su1) ;

- gravure, dans la deuxième partie (sp2) du premier substrat (su1), d'une cavité (Ca) débouchant sur la première couche réfléchissante (r1) ;

- sur un deuxième substrat (su2), dépôt d'une deuxième couche réfléchissante (r2) ;

- gravure, dans la deuxième couche réfléchissante (r2) et dans le deuxième substrat (su2), d'un emplacement (ep1, ep2) destiné à recevoir le détecteur (14) ;

- assemblage des premier et deuxième substrats (su1, su2) de manière que :

　　◦ les première et deuxième couches réfléchissantes (r1, r2) se trouvent en regard l'une de l'autre,
　　◦ l'emplacement destiné à recevoir le détecteur (ep1, ep2) se trouve à l'aplomb de la cavité (Ca),
　　◦ la pluralité de guides d'ondes optiques se trouve entre les première et deuxième couches réfléchissantes (r1, r2).

10. Procédé de fabrication selon la revendication précédente, **caractérisé en ce que** :

- le procédé comporte, après l'étape de gravure, dans la deuxième partie (sp2) du premier substrat (su1), d'une cavité (Ca) débouchant sur la première couche réfléchissante (r1), une étape de dépôt, sur le premier substrat formant une paroi de la cavité précédemment gravée, d'une première couche antireflet (ar1), et

- l'étape de gravure de l'emplacement destiné à recevoir le détecteur (14) comporte les trois sous-étapes suivantes :

　　◦ gravure, dans la deuxième couche réfléchissante (r2), d'un premier emplacement (ep1) débouchant sur le deuxième substrat (su2) ;
　　◦ dépôt, sur le deuxième substrat débouchant dans le premier emplacement, d'une deuxième couche antireflet (ar2) ;
　　◦ gravure, dans le deuxième substrat (su2), d'un deuxième emplacement (ep2) destiné à recevoir le détecteur.

11. Procédé de fabrication selon l'une quelconque des revendications 9 ou 10 **caractérisé en ce qu'**il comporte en outre :

- une étape de gravure, dans la deuxième partie (sp2) du premier substrat (su1), d'au moins des premier et deuxième évents (ev1, ev2) débouchant sur la cavité (Ca) gravée dans la deuxième partie (sp2) du premier substrat (su1) ;

- après l'assemblage des premier et deuxième substrats (su1, su2), une étape de gravure du deuxième substrat (su2) de manière à déboucher sur les premier et deuxième évents (ev1, ev2), sans déboucher sur la cavité (Ca).

## Patentansprüche

1. Vorrichtung (10, 10') zur Detektion von Gas oder Partikeln, aufweisend:

- eine Lichtquelle (11, 11'), die imstande ist, einen Lichtstrahl in mindestens einer Wellenlänge zu senden,

- einen Interaktionshohlraum (12) von Gas oder von Partikeln mit dem Lichtstrahl, aufweisend eine erste und zweite reflektierende Wand (123, 124), die etwa parallel zueinander und einander zugewandt sind,

- eine Vielzahl einmodiger optischer Wellenleiter (13a, 13b, 13c) mit jeweils einem erste Ende (13a1, 13b1, 13c1) der Breite l1, das optisch an die Lichtquelle gekoppelt ist, und einem zweiten Ende (13a2, 13b2, 13c2) der Breite l2, die größer als die Breite l1 ist, das optisch an ein erstes Ende (121) des Interaktionshohlraums gekoppelt ist, wobei jeder optische Wellenleiter in seinem zweiten Ende der Breite l2 ein Diffraktionsnetz (13a3, 13b3, 13c3) aufweist, das eine unterschiedliche Steigung P aufweist, die in Abhängigkeit von der Wellenlänge $\lambda$ des Lichtstrahls, der in dem optischen Wellenleiter ausgebreitet wird, der dem Diffraktionsnetz zugeordnet ist, des Mantelindexes n des optischen Wellenleiters, der dem Diffraktionsnetz zugeordnet ist, des effektiven Indexes $n_{eff}$ des im optischen Wellenleiter, der dem Diffraktionsnetz zugeordnet ist, ausgebreiteten Modus, der Länge L und der Höhe H des Hohlraums, des Reflexionsgrads R der ersten und zweiten reflektierenden Wand des Hohlraums für den Lichtstrahl mit der Wellenlänge $\lambda$, einer Konzentration C eines zu detektierenden Typs von Gas oder von Partikeln und eines Interaktionsparameters $\alpha$ des mit dem Lichtstrahl zu detektierenden Typs von Gas oder von Partikeln ausgewählt ist;
- und einen Detektor (14), der an ein zweites Ende (122) des Interaktionshohlraums gekoppelt ist.

2. Vorrichtung (10, 10') zur Detektion von Gas oder Partikeln nach vorangehendem Anspruch, **dadurch gekennzeichnet, dass** die Steigung P derart ausgewählt ist, dass die Norm der folgenden Gleichung minimiert wird:

$$f(P) = ln\left(1 + \frac{\alpha HC}{\sqrt{n^2 - \left(n_{eff} - \frac{\lambda}{P}\right)^2}\, ln\left(\frac{1}{R}\right)}\right)\sqrt{1 - n^2 + \left(n_{eff} - \frac{\lambda}{P}\right)^2} - \alpha LC$$

3. Vorrichtung (10, 10') zur Detektion von Gas oder Partikeln nach einem der vorangehenden Ansprüche, **dadurch gekennzeichnet, dass** sie mindestens ein erstes Diffraktionsnetz mit einer ersten Steigung und ein zweites Diffraktionsnetz mit einer zweiten Steigung aufweist, die sich von der ersten Steigung unterscheidet.

4. Vorrichtung (10, 10') zur Detektion von Gas oder Partikeln nach einem der vorangehenden Ansprüche, wobei jeder einmodige optische Wellenleiter (13a, 13b, 13c) eine Kernschicht (c) zwischen der ersten und zweiten Mantelschicht (g1, g2) aufweist, **dadurch gekennzeichnet, dass** sie eine reflektierende Schicht (125) in der Verlängerung der zweiten reflektierenden Wand (124) aufweist und dass die erste Mantelschicht (g1) auf der reflektierenden Schicht (125) eingerichtet ist und eine Dicke e aufweist, so dass:

$$\frac{\lambda_{moy}}{8n} \le e \frac{3\lambda_{moy}}{8n}$$

wobei $\lambda_{moy}$ die mittlere Wellenlänge aller verwendeten Wellenlängen ist und n der Index der ersten Mantelschicht (g1) ist.

5. Vorrichtung (10, 10') zur Detektion von Gas oder Partikeln nach einem der vorangehenden Ansprüche, **dadurch gekennzeichnet, dass** sie ein erstes und zweites Lüftungsloch (ev1, ev2) aufweist, die mit dem Interaktionshohlraum (12) kommunizieren.

6. Vorrichtung (10, 10') zur Detektion von Gas oder Partikeln nach einem der vorangehenden Ansprüche, **dadurch gekennzeichnet, dass**:

- der Interaktionshohlraum (12) ein optischer Hohlraum ist,
- der Detektor (14) ein Lichtdetektor ist und etwa parallel zur Referenzebene in der Ebene der ersten reflektierenden Wand (123) eingerichtet ist,
- die Steigung P jedes Diffraktionsnetzes ferner zu der Folge ($P_m$) gehört mit einer natürlichen Ganzzahl, so dass:

$$P_m = \frac{\lambda}{n_{eff} - \sqrt{n^2 - \frac{(2m+1)^2}{(2m+1)^2 + \left(\frac{L}{H}\right)^2}}}$$

- sich die Diffraktionsnetze etwa gemäß derselben Ebene erstrecken und jedes Diffraktionsnetz mit der Steigung P eine Vielzahl von Strukturen aufweist, die parallel zueinander sind, beabstandet durch die Steigung P, und senkrecht zu einer radialen Richtung relativ zum Lichtdetektor.

7. Vorrichtung (10, 10') zur Detektion von Gas oder Partikeln nach einem der Ansprüche 1 bis 5, **dadurch gekennzeichnet, dass**:

- der Interaktionshohlraum (12) ein optischer Hohlraum ist,
- der Detektor (14) ein Lichtdetektor ist und etwa parallel zur Referenzebene in der Ebene der zweiten reflektierenden Wand (124) eingerichtet ist,

- die Steigung P jedes Diffraktionsnetzes ferner zu der Folge ($P_m$) gehört mit einer natürlichen Ganzzahl, so dass:

$$P_m = \frac{\lambda}{n_{eff} - \sqrt{n^2 - \frac{(2m+2)^2}{(2m+2)^2 + \left(\frac{L}{H}\right)^2}}}$$

- sich die Diffraktionsnetze etwa gemäß derselben Ebene erstrecken und jedes Diffraktionsnetz mit der Steigung P eine Vielzahl von Strukturen aufweist, die parallel zueinander sind, beabstandet durch die Steigung P, und senkrecht zu einer radialen Richtung relativ zum Lichtdetektor.

8. Vorrichtung (10, 10') zur Detektion von Gas nach einem der vorangehenden Ansprüche, **dadurch gekennzeichnet, dass** der Interaktionsparameter vom Typ des mit dem Lichtstrahl zu detektierenden Gases oder der Partikel ein Absorptivitätsparameter $\alpha$ ist und dass die Lichtquelle (11') imstande ist, eine Lichtstrahl in mindestens einer ersten Wellenlänge zu senden, die einer Absorptionswellenlänge eines zu detektierenden ersten Gases entspricht, und mindestens einer zweiten Wellenlänge, die sich von der ersten Wellenlänge unterscheidet und einer Absorptionswellenlänge eines zu detektierenden zweiten Gases entspricht.

9. Verfahren zur Herstellung einer Vorrichtung (10, 10') zur Detektion von Gas oder Partikeln, aufweisend eine Lichtquelle (11,11'), die imstande ist, einen Lichtstrahl in mindestens einer Wellenlänge $\lambda$ zu senden, einen Interaktions-hohlraum (12) von Gas oder von Partikeln mit dem Lichtstrahl, aufweisend eine erste und zweite reflektierende Wand (123, 124), die etwa parallel zueinander sind, eine Vielzahl einmodiger optischer Wellenleiter (13a, 13b, 13c) mit jeweils einem ersten Ende (13a1, 13b1, 13c1) der Breite l1, das optisch an die Lichtquelle (11, 11') gekoppelt ist, und einem zweiten Ende (13a2, 13b2, 13c2) der Breite l2, die größer als die Breite l1 ist, das optisch an ein erstes Ende (121) des Interaktionshohlraums gekoppelt ist, und einen Detektor (14), der an ein zweites Ende (122) des Interaktionshohlraums gekoppelt ist, wobei das Verfahren mindestens die folgenden Schritte aufweist:

- in einem ersten Teil (sp1) eines ersten Substrats (su1), Herstellung der Vielzahl einmodiger optischer Wellenleiter, wobei jeder optische Wellenleiter eine Kernschicht (c) zwischen der ersten und zweiten Mantelschicht (g1, g2) aufweist, sowie ein Diffraktionsnetz (rd), das an einer Schnittstelle zwischen der Kernschicht und einer von der ersten oder zweiten Mantelschicht eingerichtet ist, wobei jedes Diffraktionsnetz eine unterschiedliche Steigung P aufweist, die in Abhängigkeit von der Wellenlänge $\lambda$ des Lichtstrahls, der in dem optischen Wellenleiter ausgebreitet wird, der dem Diffraktionsnetz zugeordnet ist, des Mantelindexes n des optischen Wellenleiters, der dem Diffraktionsnetz zugeordnet ist, des effektiven Indexes $n_{eff}$ des im optischen Wellenleiter, der dem Diffraktionsnetz zugeordnet ist, ausgebreiteten Modus, der Länge L und der Höhe H des Hohlraums, des Reflexionsgrads R der ersten und zweiten reflektierenden Wand des Hohlraums für den Lichtstrahl mit der Wellenlänge $\lambda$, einer Konzentration C eines zu detektierenden Typs von Gas oder von Partikeln und eines Interaktionsparameters $\alpha$ des mit dem Lichtstrahl zu detektierenden Typs von Gas oder von Partikeln ausgewählt ist;
- Aufbringen einer ersten reflektierenden Schicht (r1) auf die Vielzahl optischer Wellenleiter, die im erste Teil (sp1) des ersten Substrats (su1) hergestellt wurde, und auf einen zweiten Teil (sp2) des ersten Substrats (su1);
- Gravieren, in den zweiten Teil (sp2) des ersten Substrats (su1), eines Hohlraums (Ca), der auf der ersten reflektierenden Schicht (M) ausmündet;
- auf einem zweiten Substrat (su2), Aufbringen einer zweiten reflektierenden Schicht (r2);
- Gravieren, in die zweite reflektierende Schicht (r2) und in das zweite Substrat (su2), einer Stelle (ep1, ep2), die zur Aufnahme des Detektors (14) bestimmt ist;
- Verbinden des ersten und zweiten Substrats (su1, su2) derart, dass:

◦ die erste und zweite reflektierende Schicht (r1, r2) einander zugewandt sind,
◦ die Stelle, die zur Aufnahme des Detektors (ep1, ep2) bestimmt ist, sich lotrecht zum Hohlraum (Ca) befindet,
◦ die Vielzahl optischer Wellenleiter sich zwischen der ersten und zweiten reflektierenden Schicht (r1, r2) befindet.

10. Herstellungsverfahren nach vorangehendem Anspruch, **dadurch gekennzeichnet, dass**:

- das Verfahren nach dem Schritt der Gravur in den zweiten Teil (sp2) des ersten Substrats (su1) eines Hohlraums (Ca), der auf der ersten reflektierende Schicht (r1) ausmündet, einen Schritt des Aufbringens, auf das erste Substrat, das eine Wand des zuvor gravierten Hohlraums bildet, einer ersten Antireflexschicht (ar1) aufweist, und
- der Schritt der Gravur der Stelle, die zur Aufnahme des Detektors (14) bestimmt ist, die folgenden drei Unterschritte aufweist:

 ◦ Gravieren, in die zweite reflektierende Schicht (r2), einer ersten Stelle (ep1), die auf das zweite Substrat (su2) ausmündet;
 ◦ Aufbringen, auf das zweite Substrat, das in die erste Stelle ausmündet, einer zweiten Antireflexschicht (ar2);
 ◦ Gravieren, in das zweite Substrat (su2), einer zweiten Stelle (ep2), die zur Aufnahme des Detektors bestimmt ist.

**11.** Herstellungsverfahren nach einem der Ansprüche 9 oder 10, **dadurch gekennzeichnet, dass** es ferner aufweist:

- einen Schritt der Gravur, in den zweiten Teil (sp2) des ersten Substrats (su1), von mindestens einem ersten und zweiten Lüftungsloch (ev1, ev2), die auf dem Hohlraum (Ca) ausmünden, der in den zweiten Teil (sp2) des ersten Substrats (su1) graviert wurde;
- nach dem Verbinden des erstes und zweiten Substrats (su1, su2), einen Schritt der Gravur des zweiten Substrats (su2) derart, dass sie auf dem ersten und zweiten Lüftungsloch (ev1, ev2) ausmündet, ohne auf dem Hohlraum (Ca) auszumünden.

**Claims**

**1.** Device (10, 10') for detecting gases or particles comprising:

- a light source (11, 11') capable of emitting a light beam at at least one wavelength,
- a cavity (12) for interaction of gases or particles with the light beam comprising first and second reflective walls (123, 124) substantially parallel with each other and facing each other,
- a plurality of monomode optical waveguides (13a, 13b, 13c) each having a first end (13a1, 13b1, 13c1) of width l1 optically coupled to the light source and a second end (13a2, 13b2, 13c2) of width 12, greater than the width l1, optically coupled to a first end (121) of the interaction cavity, each optical waveguide comprising in its second end of width l2 a diffraction grating (13a3, 13b3, 13c3) having a distinct pitch P chosen as a function of the wavelength $\lambda$ of the light beam propagated in the optical waveguide associated with said diffraction grating, the cladding index n of the optical waveguide associated with the diffraction grating, the effective index $n_{eff}$ of the mode propagated in the optical waveguide associated with the diffraction grating, the length L and the height H of the cavity, the reflection rate R of the first and second reflective walls of the cavity for the light beam at the wavelength $\lambda$, a concentration C of a type of gas or particle to detect and a parameter $\alpha$ of interaction of the type of gas or particle to detect with the light beam;
- and a detector (14) coupled to a second end (122) of the interaction cavity.

**2.** Device (10, 10') for detecting gases or particles according to the preceding claim **characterised in that** the pitch P is chosen so as to minimise the norm of the following equation:

$$f(P) = ln\left(1 + \frac{\alpha HC}{\sqrt{n^2 - \left(n_{eff} - \frac{\lambda}{P}\right)^2} \, ln\left(\frac{1}{R}\right)}\right)\sqrt{1 - n^2 + \left(n_{eff} - \frac{\lambda}{P}\right)^2} - \alpha LC$$

**3.** Device (10, 10') for detecting gases or particles according to one of the preceding claims **characterised in that** it comprises at least one first diffraction grating having a first pitch, and a second diffraction grating having a second pitch distinct from the first pitch.

**4.** Device (10, 10') for detecting gases or particles according to one of the preceding claims, in which each monomode optical waveguide (13a, 13b, 13c) has a core layer (c) intercalated between first and second cladding layers (g1, g2), **characterised in that** it comprises a reflective layer (125) in the extension of the second reflective wall (124), and **in that** the first cladding layer (g1) is arranged on said reflective layer (125) and has a thickness e such that:

$$\frac{\lambda_{av}}{8n} \leq e \leq \frac{3\lambda_{av}}{8n}$$

where $\lambda_{av}$ is the average wavelength of all the wavelengths used and n is the index of the first cladding layer (g1).

5. Device (10, 10') for detecting gases or particles according to one of the preceding claims **characterised in that** it comprises first and second vents (ev1, ev2) communicating with the interaction cavity (12).

6. Device (10, 10') for detecting gases or particles according to one of the preceding claims **characterised in that**:

- the interaction cavity (12) is an optical cavity,
- the detector (14) is a light detector and is arranged substantially parallel to the reference plane, in the plane of the first reflective wall (123),
- the pitch P of each diffraction grating further belongs to the series ($P_m$), with m a natural integer, such that:

$$P_m = \frac{\lambda}{n_{eff} - \sqrt{n^2 - \frac{(2m+1)^2}{(2m+1)^2 + \left(\frac{L}{H}\right)^2}}}$$

- the diffraction gratings extend substantially along a same plane and each diffraction grating of pitch P has a plurality of structures parallel with each other, spaced apart by the pitch P, and perpendicular to a radial direction relative to the light detector.

7. Device (10, 10') for detecting gases or particles according to any of claims 1 to 5 **characterised in that**:

- the interaction cavity (12) is an optical cavity,
- the detector (14) is a light detector and is arranged substantially parallel to the reference plane, in the plane of the second reflective wall (124),
- the pitch P of each diffraction grating further belongs to the series ($P_m$), with m a natural integer, such that:

$$P_m = \frac{\lambda}{n_{eff} - \sqrt{n^2 - \frac{(2m+2)^2}{(2m+2)^2 + \left(\frac{L}{H}\right)^2}}}$$

- the diffraction gratings extend substantially along a same plane and each diffraction grating of pitch P has a plurality of structures parallel with each other, spaced apart by the pitch P, and perpendicular to a radial direction relative to the light detector.

8. Device (10') for detecting gases according to one of the preceding claims, **characterised in that** the parameter of interaction of the type of gas or particle to detect with the light beam is an absorptivity parameter $\alpha$ and **in that** the light source (11') is capable of emitting a light beam at at least one first wavelength corresponding to an absorption wavelength of a first gas to detect, and at at least one second wavelength distinct from the first wavelength and corresponding to an absorption wavelength of a second gas to detect.

9. Method for manufacturing a device for detecting gases or particles comprising a light source (11, 11') capable of emitting a light beam at at least one wavelength $\lambda$, a cavity (12) for interaction of gases or particles with the light beam comprising first and second reflective walls (123, 124) substantially parallel with each other, a plurality of monomode optical waveguides (13a, 13b, 13c) each having a first end (13a1, 13b1, 13c1) of width l1 optically coupled to the light source (11, 11') and a second end (13a2, 13b2, 13c2) of width l2, greater than the width l1, optically coupled to a first end (121) of the interaction cavity, and a detector (14) coupled to a second end (122) of the interaction cavity, the method comprising at least the following steps:

- in a first part (sp1) of a first substrate (su1), producing the plurality of monomode optical waveguides, each optical waveguide comprising a core layer (c) intercalated between first and second cladding layers (g1, g2), as well as a diffraction grating (rd) arranged at an interface between the core layer and one of the first or second cladding layers, each diffraction grating having a distinct pitch P chosen as a function of the wavelength $\lambda$ of the light beam propagated in the optical waveguide associated with said diffraction grating, the cladding index n of the optical waveguide associated with the diffraction grating, the effective index $n_{eff}$ of the mode propagated in the optical waveguide associated with the diffraction grating, the length L and the height H of the cavity, the reflection rate R of the first and second reflective walls of the cavity for the light beam at the wavelength $\lambda$, a concentration C of a type of gas or particle to detect and a parameter $\alpha$ of interaction of the type of gas or particle to detect with the light beam;
- depositing a first reflective layer (r1) on the plurality of optical waveguides produced in the first part (sp1) of the first substrate (su1) and on a second part (sp2) of the first substrate (su1);
- etching, in the second part (sp2) of the first substrate (su1), a cavity (Ca) emerging on the first reflective layer (r1);
- on a second substrate (su2), depositing a second reflective layer (r2);
- etching, in the second reflective layer (r2) and in the second substrate (su2), a location (ep1, ep2) intended to receive the detector (14);
- assembling the first and second substrates (su1, su2) in such a way that:

  ○ the first and second reflective layers (r1, r2) are facing each other,
  ○ the location intended to receive the detector (ep1, ep2) lies directly in line with the cavity (Ca),
  ○ the plurality of optical waveguides lies between the first and second reflective layers (r1, r2).

10. Manufacturing method according to the preceding claim, **characterised in that**:

   - the method comprises, after the step of etching, in the second part (sp2) of the first substrate (su1), a cavity (Ca) emerging on the first reflective layer (r1), a step of depositing, on the first substrate forming a wall of the previously etched cavity, a first antireflective layer (ar1), and
   - the step of etching the location intended to receive the detector (14) comprises the following three sub-steps:

     ○ etching, in the second reflective layer (r2), a first location (ep1) emerging on the second substrate (su2);
     ○ depositing, on the second substrate emerging in the first location, a second antireflective layer (ar2);
     ○ etching, in the second substrate (su2), a second location (ep2) intended to receive the detector.

11. Manufacturing method according to any of claims 9 or 10 **characterised in that** it further comprises:

   - a step of etching, in the second part (sp2) of the first substrate (su1), at least first and second vents (ev1, ev2) emerging on the cavity (Ca) etched in the second part (sp2) of the first substrate (su1);
   - after the assembly of the first and second substrates (su1, su2), a step of etching the second substrate (su2) so as to emerge on the first and second vents (ev1, ev2), without emerging on the cavity (Ca).

**Fig. 1**

**Fig. 2a**

**Fig. 2b**

**Fig. 3a**

Longueur d'onde, µm

Fig. 3b

Fig. 4a

Fig. 4b

Fig. 5a

Fig. 5b

Fig. 6a

Fig. 6b

sp1

g1

su1

**Fig. 7a**

rd

p

g1

**Fig. 7b**

rd

c

g1

**Fig. 7c**

r1

g2

c

g1

sp2   sp1

**Fig. 7d**

sp1   sp2

g1

c

g2

r1

**Fig. 7d'**

Ca

g1

c

g2

r1

**Fig. 7e**

ar1   ar1

Ca

g1

c

g2

r1

**Fig. 7f**

Fig. 8a

Fig. 8b

Fig. 8c

Fig. 8d

Fig. 8e

Fig. 9

su2

ev2

ev1  12  su1

su2

12  su1

v1  su2  v2

12  su1

**Fig. 10**

ev1  ev2

12

**Fig. 11a**

ev1  ev2

12

**Fig. 11b**

**EP 3 563 140 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2930506 A1